# EUROPEAN PATENT APPLICATION

(11) **EP 1 431 121 A2**
(43) Date of publication of application: **23.06.2004**
(21) Application number: 03257524.3
(22) Date of filing: 28.11.2003
(51) Int. Cl.: B60R 1/072, B60R 1/074

(54) **Electrically adjustable outer mirror**

(30) Priority: 20.12.2002 JP 2002369733; 21.04.2003 JP 2003115158
(71) Applicant: Murakami Corporation, Shizuoka-shi, Shizuoka (JP)
(72) Inventor: Motomiya, Masahiro, Fujieda-shi Shizuoka (JP); Kurita, Takahiro, Fujieda-shi Shizuoka (JP); Matsuura, Masaaki, Fujieda-shi Shizuoka (JP); Nakano, Seiya, Fujieda-shi Shizuoka (JP)
(74) Representative: Sutcliffe, Nicholas Robert

(57) **Abstract**

An electrically retractable outer mirror for a vehicle includes a mirror housing and a mirror accommodated in the mirror housing. Angle of the mirror is adjustable relative to a vehicle body. The angle of the mirror in an upward/downward direction is adjusted through an actuator arranged in the mirror housing, and an angle of the mirror in a rightward/leftward direction is adjusted by a rotating movement of the mirror housing around an axis substantially extending along a vertical direction.

## Description

The present invention relates to an electrically retractable outer mirror for a vehicle, and more particularly to a mirror angle adjustment system for use in an electrically retractable outer mirror.

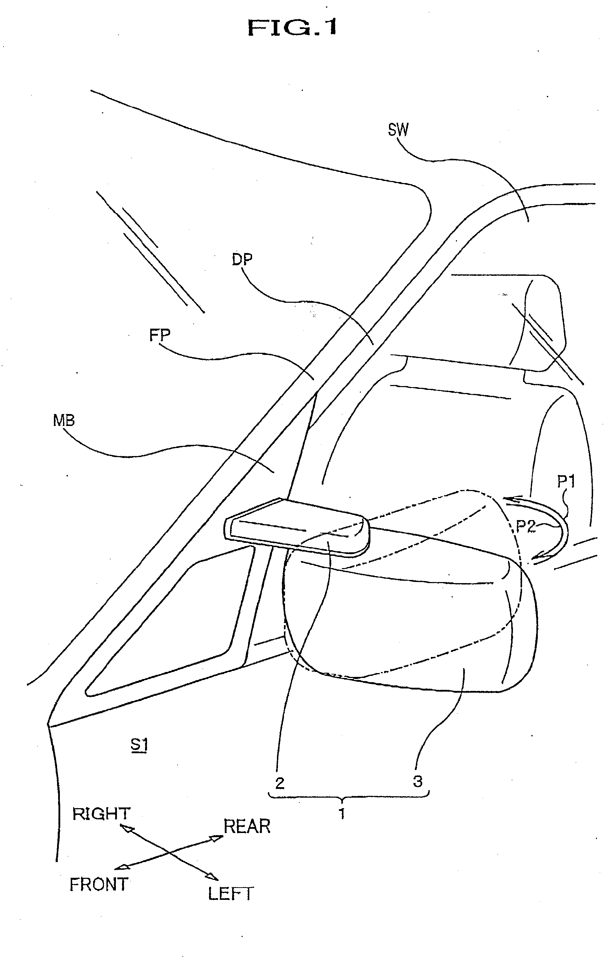

Mirror angle adjustment for an outer mirror attached to a vehicle is conventionally known. For example, Japanese Laid-open Utility Model Application No.1-96352 (see page 7, and FIG. 1) discloses a mirror angle adjustment system including an actuator consisting of motors that are arranged in an outer mirror. In this mirror angle adjustment system, adjustment to a desired mirror angle can be performed by manipulating the actuator in an upward/downward direction and in a rightward/leftward direction.

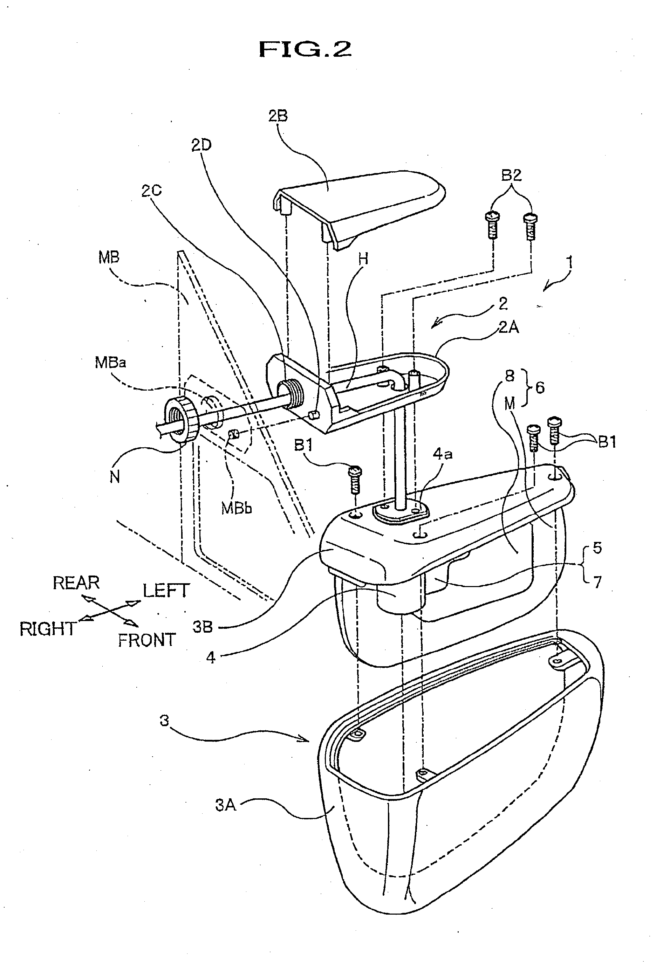

In a case of an outer mirror pair arranged on both sides of a vehicle, the housing of the outer mirror is usually of an electrically retractable type. For example, the above Laid-open Utility Model Application and Japanese Utility Model No. 3008334 (see pages 7 and 8, and FIG. 2) disclose a retraction mechanism including a motor as a power source.

However, as apparent from the above Laid-open Utility Model Application, the conventional outer mirror requires two motors as mirror angle adjustment motors; one for the adjustment in the upward/downward direction, and the other for the adjustment in the rightward/leftward direction. Therefore, when considering a motor for retracting the mirror, the total of three motors is required per one outer mirror. Because the retraction motor is normally arranged in the outer mirror, it is necessary to accommodate three motors in a single outer mirror, which leads to a difficulty in reduced size or reduced weight of the outer mirror or which results in a complicated internal layout.

In view of the foregoing drawbacks of the prior art in view, the present invention seeks to provide a mirror angle adjustment system for use in an outer mirror of a vehicle, which is simple in structure and economical, and which contributes to reduction of the size and weight of the outer mirror.

According to the present invention, an electrically retractable outer mirror for a vehicle includes a mirror housing and a mirror accommodated in the mirror housing, and the angle of the mirror is adjustable relative to a vehicle body. In this outer mirror, the angle of the mirror in an upward/downward direction is adjusted through an actuator arranged in the mirror housing, and an angle of the mirror in a rightward/leftward direction is adjusted by a rotating movement of the mirror housing around an axis substantially extending along a vertical direction.

With this construction, the outer mirror requires only one motor to be used as the actuator for the mirror angle adjustment in the upward/downward direction. In other words, one outer mirror requires only two motors, such as for adjusting the mirror angle and for retracting the mirror housing. This provides an economical mirror angle adjustment system. Further, decreasing the number of parts can provide an outer mirror which is decreased in size and weight.

The aforementioned electrically retractable outer mirror may further include a speed adjustment means for varying a rotation speed of the mirror housing between an instance where the mirror housing retracts to a retracting position or returns to an operating position and an instance where the mirror housing rotates for mirror angle adjustment in the rightward/leftward direction. With this construction of the outer mirror, for example, the rotating speed of the mirror housing can be decreased at the time of the mirror angle adjustment compared to the time of retraction or return of the mirror housing. This makes it readily possible to achieve the fine adjustment of the mirror angle.

The above outer mirrors may further include a retraction/return switch for operating a retraction and a return of the mirror housing, and a mirror angle adjustment switch for adjusting the angle of the mirror. The speed adjustment means includes a switch input determination circuit for determining a signal from the retraction/return switch and a signal from the mirror angle adjustment switch, and at least one of an applied motor voltage adjustment circuit or an applied motor current adjustment circuit. The applied motor voltage adjustment circuit is for adjusting a voltage value to be applied to a rotation motor for the mirror housing based on a determination signal outputted from the switch input determination circuit, and the applied motor current adjustment circuit is for adjusting an electric current value to be applied to the rotation motor for the mirror housing based on a determination signal outputted from the switch input determination circuit. With this construction of the outer mirror, a simple control circuit can be achieved, leading to an economical mirror angle adjustment system.

The above outer mirrors may further include a mirror angle adjustment switch for adjusting the angle of the mirror. The speed adjustment means may include a switch input time determination circuit for determining an input time of a signal from the mirror angle adjustment switch, and at least one of an applied motor voltage adjustment circuit or an applied motor current adjustment circuit. The applied motor voltage adjustment circuit is for adjusting a voltage value to be applied to a rotation motor for the mirror housing based on a determination signal outputted from the switch input time determination circuit, and the applied motor current adjustment circuit is for adjusting an electric current value to be applied to the rotation motor for the mirror housing based on a determination signal outputted from the switch input time determination circuit. With this construction, the outer mirror requires only one operating switch. Also, a simple control circuit can be achieved, leading to an economical mirror angle adjustment system.

The above outer mirrors may further include a housing angle detection/storage means for detecting and storing an angle of the mirror housing in the rightward/leftward direction just before retracting the mirror housing. When the mirror housing is returned from the retracted position to the operating position, the mirror housing retains the angle to which it was adjusted before the retraction. With this construction of the outer mirror, it is not necessary to adjust the mirror angle whenever the mirror housing is returned from the retracting position, leading to improvement in the utility.

In the aforementioned outer mirrors, a rotating angle of the mirror housing may be detected by a detected member and a detecting member for detecting the position of the detected member. The detected member may be provided at either one of a stationary portion fixed to the vehicle body or the mirror housing, and the detecting member may be provided at the other one of the mirror housing or the stationary portion. With this construction of the outer mirror, data obtained from the detected member and the detecting member always corresponds to the rotating angle of the mirror housing relative to the stationary portion in a proportional relation. Therefore, with the feedback of the data at the time returning the mirror housing, it is possible to return the mirror housing reliably to the operating position that is previously detected before retraction.

In the aforementioned outer mirrors a rotating angle of the mirror housing may be detected based on the number of rotations of a rotation motor for the mirror housing. With this construction of the outer mirror, the rotating angle of the mirror housing can be detected with a simple construction.

In the aforementioned outer mirrors, the mirror housing may be positioned in a retraction origin position before the mirror housing is returned from the retracted position to the operating position. With this construction of the outer mirror, even if the mirror housing positioned in the retracted position receives an external load and rotates away from the original retraction origin position, the mirror housing is always returned to the operating position based on the retraction origin position as a reference point, so that the mirror housing can be returned to the same position as before the retraction.

In the aforementioned outer mirrors, the mirror housing may be positioned in the retraction origin position at a time when an ignition key is turned, for example to an "ACC" position. With this construction of the outer mirror, the mirror housing can be positioned in the retraction origin position by the time when the driver manipulates the switch to return the mirror housing to the operating position. Therefore, the mirror housing only rotates in the direction toward the operating position, leading to a quick return operation.

Further, in the aforementioned outer mirrors, the mirror housing may be positioned in the retraction origin position at a time when doors of the vehicle are unlocked. With this construction of the outer mirror, the mirror housing can be positioned in the retraction origin position by the time when the driver manipulates the switch to return the mirror housing to the operating position. Therefore, the mirror housing only rotates in the direction toward the operating position, leading to a quick return operation.

The aforementioned outer mirrors may also have a control means, and the control means may be adapted to control the movement of the outer mirror in one or more of the ways described above.

### BRIEF DESCRIPTION OF THE DRAWINGS

Preferred embodiments of the present invention will be described below, by way of example only, with reference to the accompanying drawings, in which:
Fig. 1 is a perspective view illustrating an outer mirror attached to a left side of a vehicle;
Fig. 2 is an exploded perspective view schematically illustrating the interior of the outer mirror;
Fig. 3 is an exploded perspective view of an actuator;
Fig. 4 is a control block diagram with respect to the rotating speed and the rotating angle of the mirror housing;
Fig. 5 is a control block diagram illustrating an example of the housing angle detection/storage circuit shown in Fig. 4;
Fig. 6A is a perspective view of a DC brush motor with its casing removed, Fig. 6B is a sectional view explaining the brush part, and Fig. 6C is a sectional view explaining the rotor part;
Fig. 7 is a wave form chart showing a torque variation during one rotation of the motor;
Fig. 8A is a wave form chart of a switch signal, and Fig. 8B is a wave form chart of a square wave;
FIG. 9 is a control block diagram with respect to the rotating speed and the rotating angle of the mirror housing in an embodiment where the retraction/return switch is omitted;
FIG. 10 is a control block diagram in another embodiment;
FIG. 11 is a flow chart for amirror angle adjustment operation and a retracting/returning operation of the mirror housing;
FIG. 12 is a flow chart for the retracting/returning operation of the mirror housing;
FIG. 13 is a flow chart for the mirror angle adjustment operation in the retracting direction;
FIG. 14 is a flow chart for the mirror angle adjustment operation in the returning direction;
FIG. 15 is a flow chart for the retracting/returning operation of the mirror housing;
FIG. 16 is a partial flow chart for the retracting/returning operation of the mirror housing;
FIG. 17 is a partial flow chart for the retracting/returning operation of the mirror housing; and
FIG. 18 is a partial flow chart for the retracting/returning operation of the mirror housing.

### INCORPORATION BY REFERENCE

The present application claims priority to Japanese Patent Applications No.2002-369733 and No.2003-115158, the contents of which are hereby incorporated by reference.

The present invention will be described with reference to the accompanying drawings. Herein, directions referred to as "forward/rearward", "rightward/leftward", and "upward/downward" are determined based on outer mirrors attached to a vehicle body.

As shown in FIG. 1, an outer mirror 1 is of an upper suspended type side view mirror, which includes a mirror base 2 extending sideward from the side surface of a vehicle, and a mirror housing 3 attached below the mirror base 2. The mirror base 2 is fixed, for example, to a door pillar DP which forms part of a window frame of a side window SW at a side door S1, or on a bracket MB for the outer mirror arranged at the front end portion of the side door S1 as illustrated in the figure. The mirror base 2 may be fixed to a front pillar FP of the vehicle body by appropriately modifying the shape of the mirror base 2. The mirror base 2 may be formed integrally with the bracket MB.

As shown in FIG. 2, the mirror base 2 includes a base body 2A and an upper cover 2B which form a separate type casing divided into upper and lower halves. Accommodated in the mirror base 2 are a harness H for the supply of electric supply from the vehicle body to the mirror housing 3, screws B2 for attaching the mirror housing 3 (specifically, an upper end base 4a of the shaft 4) to the base body 2A, and the like. The base body 2A is provided with a holding portion 2C and a positioning pin 2D at a surface facing to the bracket MB. The holding portion 2C has a tubular shape, and the outer peripheral surface thereof is formed with threads. The mirror base 2 is fixed to the bracket MB by inserting the holding portion 2C and the positioning pin 2D into the corresponding mounting hole MBa and positioning hole MBb formed in the bracket MB, followedby fastening a nutN on the holding portion 2C protruding inwardly from the bracket MB.

The mirror housing 3 includes a lower housing 3A and an upper housing 3B. The lower housing 3A has an opening at the rear side and the top side, respectively. The upper housing 3B covers the opening at the top side of the lower housing 3A. The lower surface of the upper housing 3B are provided with a shaft 4 substantially extending along the vertical direction, a drive unit 5, a mirror assembly 6, etc., so that they are accommodated in the lower housing 3A when the upper housing 3B is attached to the lower housing 3A by screws B1.

The drive unit 5 consists of a speed reduction mechanism (not shown) such as formed by a worm gear mechanism meshing with the shaft 4, and a motor 7 as a drive source for the rotation of the mirror housing 3. Driving force of the motor 7 is transmitted to the shaft 4 through the speed reduction mechanism, so that when the motor 7 drives, the mirror housing 3 equipped with the drive unit 5 receives a reaction force from the shaft 4 and rotates around the shaft 4, i.e., around the axis substantially extending along the vertical direction. It should be noted that the shaft 4 is fixed to the mirror base 2 through the upper end base 4a and by the screws B2 as previously described. The mirror assembly 6 includes a mirror M for viewing rear side, and an actuator unit 8 (hereinafter merely referred to as an "actuator") for adjusting the angle (mirror surface angle) of the mirror M. The harness H is wired through the internal of the hollow shaft 4 and is connected to the drive unit 5 and the actuator 8.

According to the present embodiment, the angle of the mirror M in the upward/downward direction can be adjusted through the actuator 8 arranged in the mirror housing 3, and the angle of the mirror M in the rightward/leftward direction can be adjusted by the rotating movement of the mirror housing 3 around the shaft 4, that is, the rotating movement around the axis substantially extending along the vertical direction. The angle in the rightward/leftward direction indicates the tilt angle in the instance where the mirror M rotates around the vertical axis, and the angle in the upward/downward direction indicates the tilt angle in the instance where the mirror M rotates around the horizontal axis.

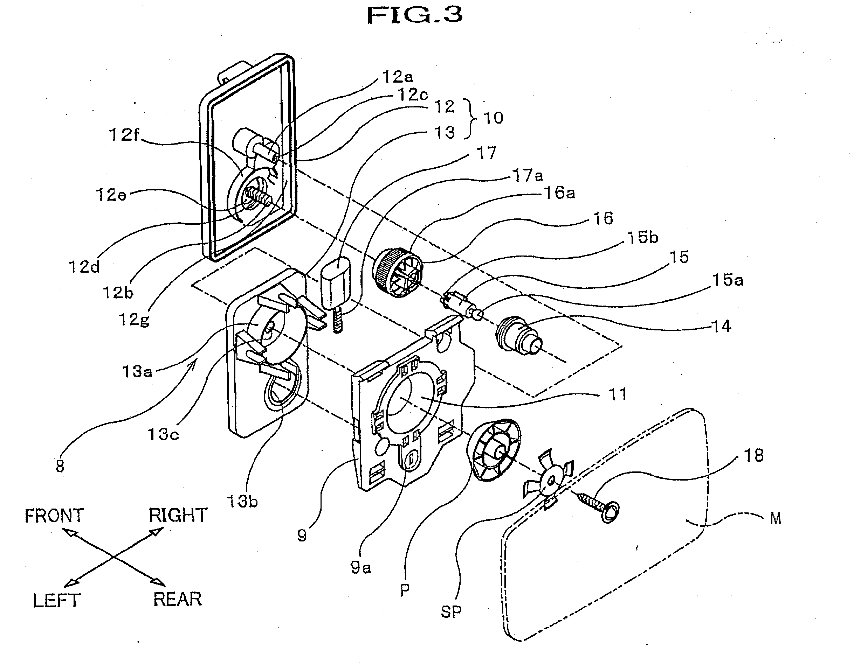

With reference to FIG. 3, one embodiment of the actuator 8 will be described. As seen in FIG. 3, the actuator 8 includes a mirror holder 9 for supporting the mirror M, and a motor housing 10 for tiltably supporting the mirror holder 9. The mirror holder 9 is a plate-like member substantially in the form of rectangular, and a fulcrum portion 11 as the center of rotation of the mirror M protrudes in the forward direction. The fulcrum portion 11 is in the shape of a hollow hemisphere with its front part cut off. The motor housing 10 is divided into a front housing 12 and a rear housing 13, and a packing 14, an adjust nut 15, a worm wheel 16, and a motor 17 are accommodated in the motor housing 10.

The front housing 12 is provided with a tubular pin 12b extending in the rearward direction. At a position to be the center of rotation of the mirror holder 9, the front housing 12 is also provided with a protrusion 12a extending in the rearward direction. An internal thread portion 12c is formed in the distal end surface of the protrusion 12a for the threaded engagement with a screw 18. The screw 18 is used for fixing the mirror holder 9. Provided at an outer peripheral surface of the pin 12b is an external thread portion 12d, through which the adjust nut 15 slides toward and away from the front housing 12. A recess portion 12e and a rib 12f are formed around the pin 12b. The recess portion 12e rotatably supports the worm wheel 16, and the rib 12f prevents grease from scattering around. Amotor mount portion 12g having a recess shape is formed adjacently to the recess portion 12e and the rib 12f.

The rear housing 13 is provided with a recess-like support portion 13a for slidably supporting the fulcrum portion 11 of the mirror holder 9, and at the lower side of the support portion 13a a circular hole 13b is formed for the engagement with the flange portion of the packing 14. A circular hole 13c is formed in the bottom wall of the support portion 13a so that the distal end of the protrusion 12a can be inserted through the circular hole 13c.

To assemble the motor housing 10 and the mirror holder 9, the fulcrum portion 11 of the mirror holder 9 is fitted into the support portion 13a of the rear housing 13, and then a pressing member P in the form of a hemisphere with its front part cut off and a spring member SP are fixed to the protrusion 12a that protrudes from the circular hole 13c, followed by screwing the screw 18 into the internal thread portion 12c of the protrusion 12a, so that the mirror holder 9 is fixed to the motor housing 10 in a manner to be tiltable and to be urged with a certain urging force.

The rear end of the adj ust nut 15 is provided with a sphere-like pivot portion 15a for the fitting engagement with a recess portion 9a (shown by the dotted line of FIG. 3) of the mirror holder 9. The position where the pivot portion 15a and the recess portion 9a make the fitting engagement is formed just below the fulcrum portion 11. The adjust nut 15 is fixed to the worm wheel 16 in a manner to be slidable in the forward and rearward direction and to be non-rotatable relative to the worm wheel 16. Provided at the front end of the adjust nut 15 are nails 15b which are threadedly engageable with the external thread portion 12d. Gears 17a formed on the rotary shaft of the motor 17 mesh with the gears 16a of the worm wheel 16.

With the construction as described above, when the motor 17 drives in the forward or rearward direction, the worm wheel 16 and thus the adjust nut 15 rotates in the forward or rearward direction. Because the nails 15b are threadedly engaging with the external thread portion 12d, the adjust nut 15 moves in the forward/rearward direction by the feed screw action. This can achieve the angle adjustment of the mirror holder 9 and thus the mirror M in the upward/downward direction around the fulcrum portion 11 as the center of rotation.

As previously described, the mirror angle adjustment of the mirror M in the rightward/leftward direction is carried out by driving the motor 7 of the drive unit 5 to rotate the mirror housing 3 around the shaft 4. While the conventional outer mirror is constructed such that the mirror housing 3 only stops at two positions, i.e., the retracting position and the operating position, the present invention provides a structure by which the mirror housing 3 is stopped at any arbitrary rotation points so as to adjust the mirror angle in the rightward/leftward direction. Such a structure can be accomplished by controlling the rotational movement of the motor 7.

According to the construction wherein the mirror angle adjustment in the upward/downward direction can be made by the actuator 8 arranged in the mirror hosing 3 and the mirror angle adjustment in the rightward/leftward direction can be made by the rotational movement of the mirror housing 3, the outer mirror 1 requires only one motor 17 for the mirror angle adjustment in the upward/downward direction, unlike the conventional construction which requires two motors for the mirror angle adjustment in the upward/downward direction as well as in the rightward/leftward direction.

Because a set of outer mirrors is attached on the right and left sides of the vehicle, it is possible to reduce two motors per set of outer mirrors when compared with the conventional outer mirrors. Considering a mirror angle adjustment mechanism such as including the worm wheel 16 and the adjust nut 15, the present invention provides a mirror angle adjustment mechanism for the mirror M which significantly decreases the number of parts, which is simple in assembly, and which is economical. Further, with decreasing the number of parts, it is possible to reduce the size and the weight of the outer mirror 1.

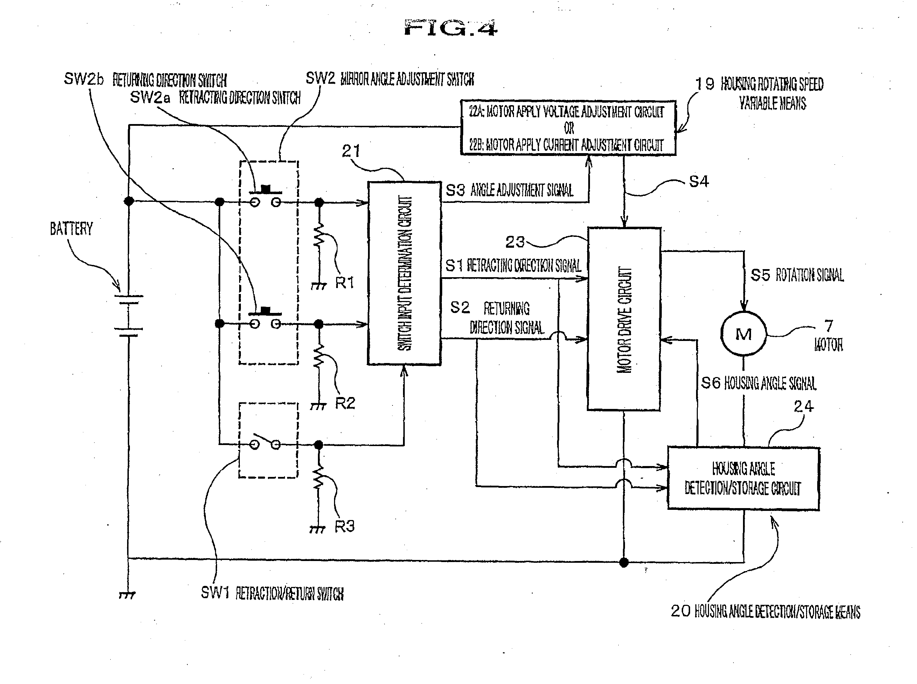

Upon retracting the mirror housing 3 positioned in the operating position (return position), it is desired to retract the mirror housing 3 as fast as possible. However, if the rotating speed of the mirror housing 3 at the time of retraction is adapted to the mirror angle adj ustment in the rightward/leftward direction, the adjustment speed for the mirror M becomes too fast for the fine adjustment. Therefore, with the provision of a speed adjustment means 19 (Fig. 4) for varying the rotating speed of the mirror housing 3 between the instance where the mirror housing 3 retracts to the retracted position (or returns to the operating position) and the instance where the mirror housing 3 rotates for the mirror angle adjustment in the rightward/leftward direction, specifically, by decreasing the rotating speed of the mirror housing 3 at the time of the mirror angle adjustment in the rightward/leftward direction than at the time of retraction (or return) of the mirror housing 3, the fine adjustment of the mirror M can be readily made.

In order to detect and store the angle of the mirror M just before the storage, that is, the angle of the mirror housing 3 in the rightward/leftward direction, the outer mirror 1 includes a housing angle detection/storage means 20 (FIG. 4) so that when the mirror housing 3 is returned from the retracting position to the operating position, the mirror housing retains the same angle that is adjusted before the retraction. With this construction, it is not necessary to adjust the angle of the mirror M whenever the mirror housing 3 is returned from the retracting position to the operating position, leading to improvement in the utility.

Specific embodiment of such means will be described in detail with reference to FIG. 4. As seen in FIG. 4, a retraction/return switch SW1 is a switch for operating a retraction and a return of the mirror housing 3. The retraction/return switch SW1 is normally made by a single-pole single-throw switch. A mirror angle adjustment switch SW2 is a switch for adjusting the angle of the mirror M in the rightward/leftward direction (direction P1 of FIG. 1 (hereinafter also referred to as a "retracting direction") and direction P2 of FIG. 1 (hereinafter also referred to as a "returning direction")). The mirror angle adjustment switch SW2 is of an automatic reset type switch, which turns ON during the manipulation of the switch and automatically turns OFF when the driver's finger is released from the switch. The switch SW2a for the retracting direction and the switch SW2b for the returning direction are both positioned in "OFF" position in FIG. 4. The retraction/return switch SW1 and the mirror angle adjustment switch SW2 are both arranged around the driver seat. Although not illustrated in FIG. 4, the mirror angle adjustment switch SW2 includes a switch for adjusting the angle of the mirror M in the upward/downward direction.

Signals through the retraction/return switch SW1 and the mirror angle adjustment switch SW2 are all outputted to a switch input determination circuit 21. Reference numerals R1, R2, and R3 respectively denote a resistance for current rectification.

### SWITCH INPUT DETERMINATION CIRCUIT 21

The switch input determination circuit 21 receives a signal inputted at least through the retraction/return switch SW1 or the mirror angle adjustment switch SW2, and outputs a retracting direction signal S1 or a returning direction signal S2 to a motor drive circuit 23. When the retraction/return switch SW1 is manipulated, the switch input determination circuit 21 outputs the retracting direction signal S1 or the returning direction signal S2 for a predetermined operating time (e.g. , 5 seconds). When a signal is inputted through the mirror angle adj ustment switch SW2, the switch input determination circuit 21 outputs the retracting direction signal S1 or the returning direction signal S2 only in the case where the mirror angle adjustment switch SW2 is ON, namely, only in the case where the switch SW2a for the retracting direction or the switch SW2b for the returning direction is manipulated by the driver. Further, the switch input determination circuit 21 inputs an angle adjustment signal S3 either to an applied motor voltage adjustment circuit 22A or an applied motor, current adjustment circuit 22B only in the case where the mirror angle adjustment switch SW2 is ON.

### APPLIED MOTOR VOLTAGE ADJUSTMENT CIRCUIT 22A

### APPLIED MOTOR CURRENT ADJUSTMENT CIRCUIT 22B

The applied motor voltage adjustment circuit 22A outputs a signal S4 indicating a drop of the applied motor voltage to the motor drive circuit 23 only in the case where a determination signal outputted from the switch input determination circuit 21, that is, the angle adjustment signal S3 is being inputted. In place of the applied motor voltage adjustment circuit 22A, the applied motor current adjustment circuit 22B may be employed. The applied motor current adjustment circuit 22B outputs a signal S4 indicating a limit of the applied motor current to the motor drive circuit 23 only in the case where a determination signal outputted from the switch input determination circuit 21, that is, the angle adjustment signal S3 is being inputted. The speed adjustment means 19 consists of either one of the applied motor voltage adjustment circuit 22A or the applied motor current adjustment circuit 22B, and the switch input determination circuit 21.

### MOTOR DRIVE CIRCUIT 23

In the case where the retracting direction signal S1 is inputted to the motor drive circuit 23 without an input of the signal S4, the motor drive circuit 23 outputs a rotation signal S5 to the motor 7 for the predetermined operating time (5 seconds) such that the mirror housing 3 rotates in the retracting direction. Accordingly, the mirror housing 3 is locked in the predetermined retracting position. On the contrary, in the case where the returning direction signal S2 is inputted to the motor drive circuit 23 without an input of the signal S4, a housing angle detection/storage circuit 24. inputs a housing angle signal S6 to the motor drive circuit 23. The motor drive circuit 23 then outputs the rotation signal S5 to the motor 7 based on the housing angle signal S6, so that the mirror housing 3 rotates in the returning direction.

### HOUSING ANGLE DETECTION/STORAGE CIRCUIT 24

The housing angle detection/storage circuit 24 detects and stores the rotating angle of the mirror housing 3 that is rotated by the rotation of the motor 7 in the case where the motor drive circuit 23 does not receive the signal S4 and the retracting direction signal S1 is inputted to the motor drive circuit 23. The housing angle detection/storage circuit 24 also outputs the housing angle signal S6 corresponding to the stored rotating angle of the mirror housing 3 to the motor drive circuit 23 in the case where the motor drive circuit 23 does not receive the signal S4 and the returning direction signal S2 is inputted to the motor drive circuit 23. The housing angle detection/storage means 20 consists of the housing angle detection/storage circuit 24.

The housing angle detection/storage means 20 may be achieved, for example, by detecting and storing the number of rotations of the motor 7. In this instance, when the retracting direction signal S1 is inputted to the housing angle detection/storage circuit 24 without an input of the signal S4 to the motor drive circuit 23, the housing angle detection/storage circuit 24 detects and stores the number of rotations of the motor 7 that is rotated based on the rotation signal S5. Further, when the returning direction signal S2 is inputted to the housing angle detection/storage circuit 24 without an input of the signal S4 to the motor drive circuit 23, the housing angle detection/storage circuit 24 outputs the rotation number signal corresponding to the stored number of rotations of the motor 7 to the motor drive circuit 23 as the housing angle signal S6. In other words, the number of rotations of the motor 7 that is required for the retraction of the mirror housing 3 is fed back to the motor 7 upon returning the mirror housing 3 to the operating position.

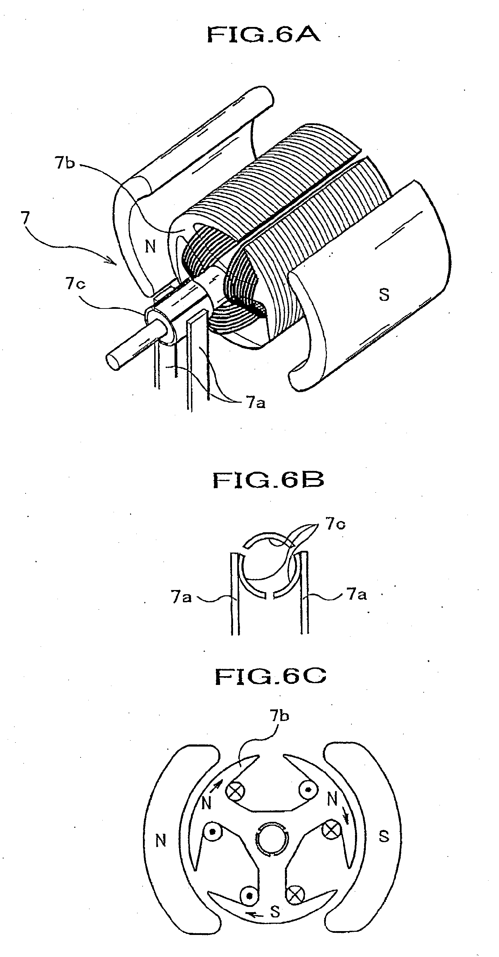

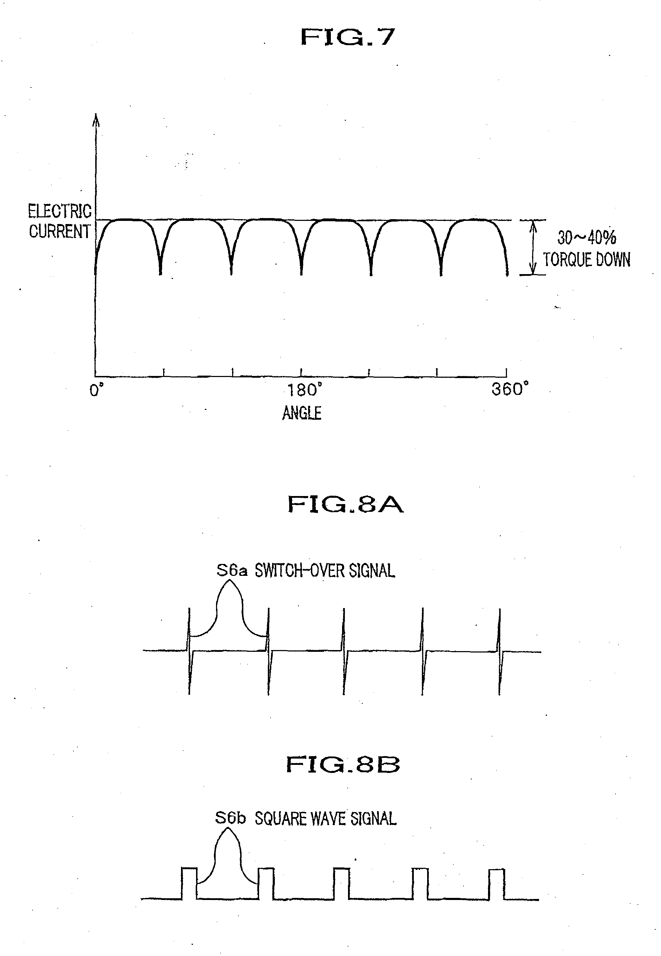

Specific means for detecting the number of rotations of the motor 7 will be described below. As shown in FIG. 6A, the motor 7 is made by a three-pole DC brush motor which includes a pair of motor brush (hereinafter simply referred to as a "brush") and a three-pole rotor 7b with winded coil. As seen in FIG. 6B, three pieces of commutators 7c contact with the brush 7a. As shown in FIG. 7, an electric current that flows to the motor 7 during one rotation (360 degrees) of the rotor 7b shows a ripple wave form. Therefore, the number of rotations of the motor 7 can be detected by counting the number of variations of this electric current value.

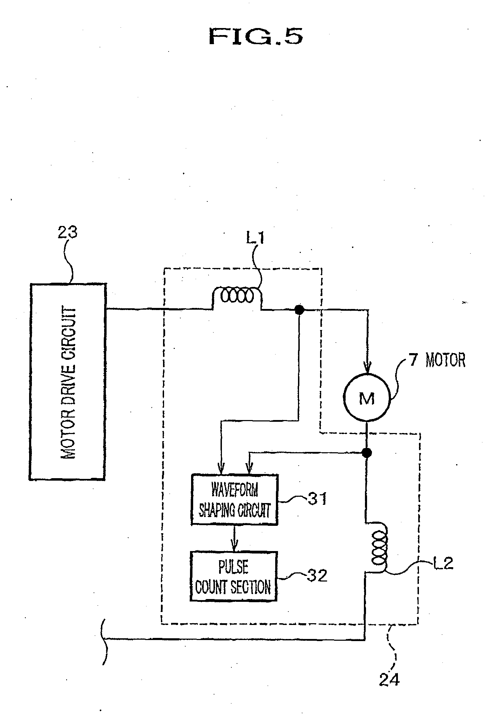

Also, it is possible to detect bimodal spike-shape high frequency wave signal (switch-over signal S6a shown in FIG. 8A) that occurs at the time of switching the commutator 7c relative to the brush 7a. This embodiment is shown in FIG. 5. As the housing angle detection/storage circuit 24, inductances L1, L2 are arranged in serial at the front and rear of the motor 7 so that the impedance is increased only for alternative current of the motor 7. This allows the switch-over signal S6a to be taken out as a large electric voltage from the terminal of the motor 7. When this switch-over signal S6a becomes greater than a certain voltage level, a waveform shaping circuit 31 arranges it in a square wave signal S6b (FIG. 8B) and counts the number of pulses at a pulse count section 32. Therefore, the number of rotations of the motor 7 can be detected. The pulse count section 32 includes a microcomputer, etc.

As described above, with a simple construction such as to detect the number of rotations of the motor 7, the rotating angle of the mirror housing 3 can be detected. Especially, the circuit can be simplified by the construction to detect the switch-over signal S6a, and the detection accuracy for the switch-over signal S6a can be improved by providing the waveform shaping circuit 31 and the pulse count section 32. In place of the aforementioned DC brush motor, other types of motors such as a stepping motor, brushless motor and a servo motor may be employed as the motor 7.

However, the following disadvantage arises in the method for detecting/storing the number of rotations of the motor 7. In general, a clutch mechanism (not shown) is provided between the shaft 4 and the speed reduction mechanism (not shown). The clutch mechanism allows the mirror housing 3 to be rotated relative to the shaft 4 for a certain angle in a direction toward the speed reduction mechanism, so as to prevent damage of the mirror housing 3, for example, at the time when the mirror housing 3 bumps against an obstacle and receives an external load. If the clutch mechanism operates during the retraction of the mirror housing 3, there is a difference between the rotating angle of the mirror housing from the operating position to the retracting position and the number of rotations of the motor 7. In other words, if the number of rotations of the motor 7 that is required for the retraction of the mirror housing 3 is fed back to the motor 7 upon returning the mirror housing 3 to the operating position, the mirror housing 3 will be returned to a different position away from the operating position.

To overcome such a disadvantage, the rotating angle of the mirror housing 3 can be detected by a detected member (not shown) and a detecting member (not shown) for detecting the detected member or a position of the detected member. The detected member is provided at either one of a stationary portion fixed to the vehicle body or the mirror housing 3, and the detecting member is provided at the other one of the mirror housing 3 or the stationary portion. According to this construction, data obtained from the detected member and the detecting member always correspond to the rotating angle of the mirror housing 3 relative to the stationary portion with a proportional relation. Therefore, even if the clutch mechanism has been operated, with the feedback of the data at the time returning to the mirror housing 3, it is possible to return the mirror housing 3 reliably to the operating position that is previously detected before retraction.

As an example of the detected member and the detecting member, a rotary encoder may be employed. For example, a rotary slit plate (not shown and corresponding to the detected member) having a plurality of slits along its circumferential direction is fixed to the shaft 4 as the stationary portion, and a light emitting/receiving element (not shown and corresponding to the detecting member) is fixed to the mirror housing 3 in accordance with the rotary slit plate. Therefore, when the mirror housing 3 rotates, the light emitting/receiving element counts the number of slits passing across, so that the rotating angle of the mirror housing 3 in a half way through the rotation relative to the shaft 4 can be always detected. Of course, even if the clutch mechanism operates, it is possible to count the number of slits passing across the light emitting/receiving element during the rotation of the mirror housing 3 through the clutch mechanism. As the result, the rotary encoder always outputs a signal (pulse number) in proportion to the rotating angle of the mirror housing 3 relative to the shaft 4.

As an example of the detected member and the detecting member, in place of the rotary encoder, a magnetic sensor or resistance volume may be employed. Also, the detected member may be provided at the mirror housing 3, while the detecting member is provided at the stationary portion.

Operation of the circuit will be described for retracting and returning the mirror housing 3 and for mirror angle adj ustment.

### RETRACTION OF MIRROR HOUSING 3

The retraction/return switch SW1 turns ON when the driver manipulates the retraction/return switch SW1 in the retracting direction. The switch input determination circuit 21 outputs the retracting direction signal S1 to the motor drive circuit 23 for a certain predetermined operating time (e.g., 5 seconds) when the signal from the retraction/return switch SW1 changes from an L signal to an H signal. At the same time, the switch input determination circuit 21 also outputs the retracting direction signal S1 to the housing angle detection/storage circuit 24. Herein, the L signal represents a low electric voltage signal (normally 0 (zero) V signal) , and the H signal represents a high electric voltage signal (normally 5 V signal).

During the input of the retracting direction signal S1, the motor drive circuit 23 outputs the rotation signal S5 to the motor 7 so as to rotate the mirror housing 3 in the retracting direction. By this operation, the mirror housing 3 rotates in the retracting direction and is locked in the predetermined retracting position. The voltage value (or the electric current value) to be applied to the motor 7 together with the rotation signal S5 is a normal value, so that the mirror housing 3 retracts in the retracting position with a relatively fast rotating speed. The housing angle detection/storage circuit 24 then temporally stores the rotating angle of the mirror housing 3 that is required for locking the mirror housing 3 in the retracting position. As previously described, in the case where the rotary encoder is employed, the housing angle detection/storage circuit 24 stores the number of passing slits (pulses) of the rotary slit plate that is detected by the light emitting/receiving element.

### RETURN OF MIRROR HOUSING 3

The retraction/return switch SW1 turns OFF when the driver manipulates the retraction/return switch SW1 in the returning direction. The switch input determination circuit 21 outputs the retracting direction signal S2 to the motor drive circuit 23 for a certain predetermined operating time (e.g., 5 seconds) when the signal from the retraction/return switch SW1 changes from an H signal to an L signal. At the same time, the switch input determination circuit 21 also outputs the returning direction signal S2 to the housing angle detection/storage circuit 24.

During the input of the returning direction signal S2, the motor drive circuit 23 outputs the rotation signal S5 to the motor 7 so as to rotate the mirror housing 3 in the returning direction. In this event, the housing angle detection/storage circuit 24 outputs the housing angle signal S6 that is temporally stored and corresponds to the rotating angle of the mirror housing 3 to the motor drive circuit 23. When the mirror housing 3 rotates for the same rotating angle, the motor drive circuit 23 stops the output of the rotation signal S5. To be more specific, in the case of the embodiment where the rotary encoder is employed, the motor drive circuit 23 stops the output of the rotation signal S5 when the rotary encoder detects the same number of pulses as temporally stored. Therefore, the mirror housing 3 returns to the operating position same as just before the retraction, so that the mirror M retains the angle that is adjusted before the retraction. The voltage value (or the electric current value) to be applied to the motor 7 together with the rotation signal S5 is also a normal value, so that themirrorhousing 3 returns to the operating position with a relatively fast rotating speed .

### MIRROR ANGLE ADJUSTMENT

The driver manipulates the retracting direction switch SW2a of the mirror angle adj ustment switch SW2. Only when the retracting direction switch SW2a is ON, the switch input determination circuit 21 outputs the retracting direction signal S1 to the motor drive circuit 23 and outputs the angle adjustment signal S3 either to the motor apply voltage adjustment circuit 22A or the motor apply current adjustment circuit 22B. At the same time, the motor apply voltage adjustment circuit 22A or the motor apply current adjustment circuit 22B outputs the signal S4 indicating the drop of the motor apply voltage or the limit of the motor apply current to the motor drive circuit 23 only when the angle adjustment signal S3 is being inputted.

The motor drive circuit 23 then outputs the rotation signal S5 to the motor 7 so as to rotate the mirror housing 3 in the retracting direction. In this instance, the rotating speed of the motor 7 becomes slow because the voltage value (or the electric current value) that is applied to the motor 7 based on the signal S4 inputted to the motor drive circuit 23 is lower than that applied to the motor 7 during the manipulation of the retraction/return switch SW1. Therefore, the mirror housing 3 rotes with a slow rotating speed in the retracting direction (direction P1 of FIG. 1), so that the driver can readily carries out the fine adjustment of the mirror angle. When the driver disengages his finger from the retracting direction switch SM2a, the output of the retracting direction signal S1 is stopped, thereby stopping the rotation of the motor 7. The mirror housing 3 (mirror M) then stops in a desired position.

When the driver manipulates the returning direction switch SW2b, the mirror housing 3 (mirror M) operates in a manner similar to the above. To be more specific, only when the returning direction switch SW2b is ON, the switch input determination circuit 21 outputs the returning direction signal S2 to the motor drive circuit 23 and outputs the angle adjustment signal S3 either to the motor apply voltage adjustment circuit 22A or the motor apply current adjustment circuit 22B. The motor apply voltage adjustment circuit 22A or the motor apply current adjustment circuit 22B outputs the signal S4 indicating the drop of the motor apply voltage or the limit of the motor apply current to the motor drive circuit 23 only when the angle adjustment signal S3 is being inputted.

The motor drive circuit 23 then outputs the rotation signal S5 to the motor 7 so as to rotate the mirror housing 3 in the returning direction. In this instance, the voltage value (or the electric current value) applied to the motor 7 also becomes lower than the voltage value (or the electric current value) that is applied to the motor during the manipulation of the retraction/return switch SW1, so that the rotating speed of the motor 7 becomes slow. Therefore, the mirror housing 3 rotates with a slow rotating speed in the returning direction (direction P2 of FIG. 1), so that the driver can readily carries out the fine adjustment of the mirror angle. When the driver disengages his finger from the returning direction switch SW2b, the output of the returning direction signal S2 is stopped, thereby stopping the rotation of the motor 7. The mirror housing 3 (mirror M) is then stops in a desired position.

As describe above, there are provided the retraction/return switch SW1 for manipulating retraction and return of the mirror housing 3 and the mirror angle adjustment switch SW2 for adjusting the angle of the mirror M such that the rotating speed of the mirror housing 3 is differentiated between the retraction (or return) of the mirror housing 3 and the mirror angle adjustment of the mirror M in the rightward/leftward direction. To differentiate the rotating speed of the mirror housing 3, the outer mirror 1 is provided with the switch input determination circuit 21 for executing a determination between the signal from the retraction/return switch SW1 and the signal from the mirror angle adjustment switch SW2, and either one of the motor apply voltage adjustment circuit 22A or the motor apply current adjustment circuit 22B. The motor apply voltage adjustment circuit 22A is for adjusting the voltage value to be applied to the motor 7 based on the determination signal (angle adjustment signal S3) outputted from the switch input determination circuit 21, and the motor apply current adjustment circuit 22B is for adjusting the electric current value to be applied to the motor 7 based on the determination signal. Therefore, it is possible to provide a simple control circuit, leading to an economical mirror angle adjustment system.

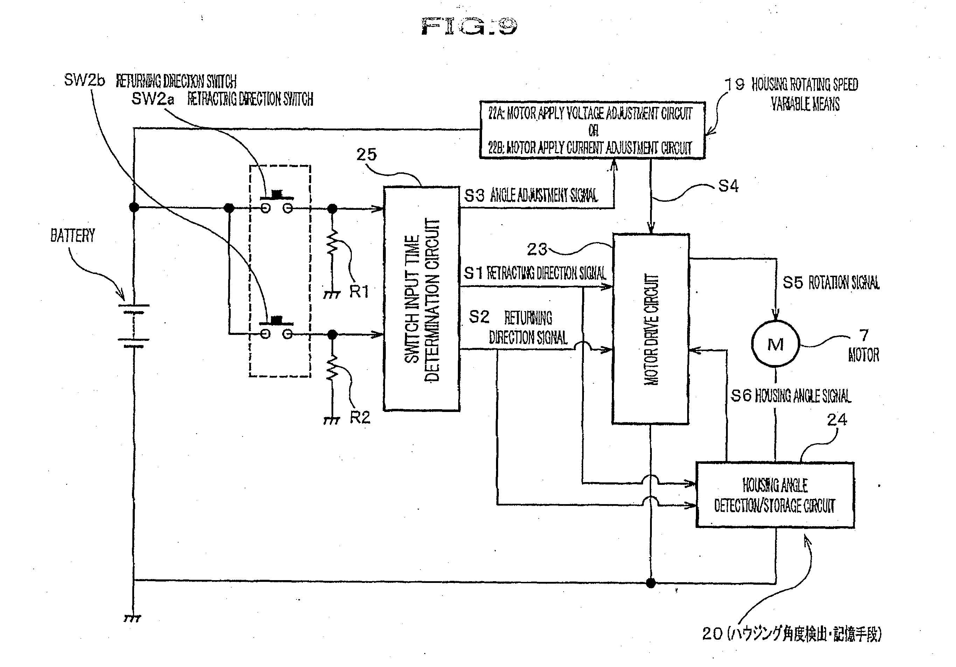

The above embodiment includes both the retraction/return switch SW1 and the mirror angle adjustment switch SW2. However, without providing the retraction/return switch SW1, the mirror angle adjustment switch SW2 may function to carry out both the mirror angle adjustment of the mirror M and the retraction/return operation of the mirror housing 3. In this instance, in place of the switch input determination circuit 21, a switch input time determination circuit 25 is employed for determining the switch input time of the mirror angle adj ustment switch SW2 as illustrated in FIG. 9.

For example, if the operation time of the retracting direction switch SW2a is longer than the setting time, that is, if the ON state of the retracting direction switch SW2a is longer than the setting time, the switch input time determination circuit 25 determines it as a retraction instruction of the mirror housing 3. Meanwhile, if the ON state of the retracting direction switch SW2a is shorter than the setting time, the switch input time determination circuit 25 determines it as an angle adjustment instruction in the retracting direction of the mirror M. Also, in the case of the returning direction switch SW2b, if the ON state is longer than the setting time, it is determined as a return instruction of the mirror housing 3. If the ON state is shorter than the setting time, it is determined as an angle adjustment instruction in the returning direction of the mirror M.

If the retracting direction switch SW2a or the returning direction switch SW2b is in ON state, the angle adjustment signal S3 is being outputted, for example, until the setting time elapses. Further, if the retracting direction switch SW2a or the returning direction switch SW2b continuously retains the ON state even after the elapse of the setting time, it is determined that the retraction instruction or the return instruction of the mirror housing 3 is being outputted. Therefore, the output of the angle adjustment signal S3 is stopped. Accordingly, the mirror housing 3 rotates with a relatively fast speed in the retracting direction or in the returning direction after the elapse of the setting time. This retains the convenience for operation.

As described above, the outer mirror 1 includes the mirror angle adjustment switch SW2 and the housing rotating speed variable means 19. The housing rotating speed variable means 19 includes the switch input time determination circuit 25 for determining the input time of the signal from the mirror angle adj ustment switch SW2, and either one of the motor apply voltage adjustment circuit 22A or the motor apply current adjustment circuit 22B. The motor apply voltage adjustment circuit 22A is for adjusting the voltage value to be applied to the motor 7 based on the determination signal (angle adjustment signal S3) outputted from-the switch input time determination circuit 25, and the motor apply current adjustment circuit 22B is for adj usting the electric current value to be applied to the motor 7 based on the determination signal. In this construction, it is not necessary to provide a retraction/return switch SW1 separately, which requires only one manipulating switch. Therefore, it is possible to provide an economical mirror angle adj ustment system, which can decrease the number of parts and which can realize a simple control circuit.

In connection with the housing angle detection/storage means 20, the following disadvantages are raised. As described above, the embodiments for detecting the rotating angle of the mirror housing 3 are mainly classified into: (1) type for detecting the number of rotations of the motor, (2) type for employing a rotary encoder, and (3) type for employing a resistance volume. Of these types, especially in (1) and (2) types, the housing angle detection/storage means 20 temporally stores data indicating the rotating angle of the mirror housing 3 at the time of retraction, and feeds the data back to the mirror housing 3 at the time of return. To be more specific, the stored pulse number of the motor is fed back in the case of (1) type, and the stored slit number (pulse number) of the slit plate is fed back in the case of (2) type.

As described above, in the case of (1) type, if the mirror housing 3 bumps against an obstacle and receives an external load during the retraction, the clutch mechanism operates and a difference arises between the rotating angle of the mirror housing 3 from the operating position to the retracting position and the number of rotations of the motor 7. Therefore, upon returning the mirror housing 3, the mirror housing 3 may return to a position different from the operating position before the retraction.

A similar drawback will arise, for example, in a case where the driver pulls off the vehicle with the mirror housing 3 retracted and walks away from the vehicle after he pulls out the ignition key. If the mirror housing 3 undesirably rotates due to an external load (for example, when a pedestrian bumps against the mirror housing 3) during the vehicle stops, the position of the mirror housing 3 deviates from the original retracting position (hereinafter referred to as a "retraction origin position"). In this instance, if the driver comes back to the vehicle and operates the mirror housing 3 to return to the operatingposition, the housing angle detection/storage means 20 feeds back the stored data from this deviated position. As the result, the position of the mirror housing 3 disadvantageously differs before and after the retraction.

Especially in the case of (2) type, if the mirror housing 3 undesirably rotates due to an external load while the ignition key is in the "ACC" (accessory power) position, the rotating angle derived from this external load can be detected because electric power is supplied to the rotary encoder. However, if electric power is not supplied to the rotary encoder such as in the case where the ignition key is pulled out, the rotating angle derived from the external load can not be detected.

In the case of (3) type, notwithstanding the position of the mirror housing 3, it is possible to return the mirror housing 3 reliably to the operating position same as before the retraction because the retracting position of the mirror housing 3 can be stored as a resistance value so that the absolute position of the mirror housing 3 can be detected.

As in the cases of (1) and (2) types, description will be made on embodiments for eliminating the drawback in that the position of the mirror housing 3 deviates upon returning the mirror housing 3. In this preferred embodiment, in order to return the mirror housing 3 from the retracting position to the operating position, the mirror housing 3 is firstly rotated to the retraction origin position notwithstanding that the mirror housing 3 is in the retraction origin position, and thereafter the data stored in the housing angle detection/storage means 20 is fed back for the returning operation of the mirror housing 3. According to this embodiment, the mirror housing 3 always returns. to the operating position with the retraction origin position as a reference, so as to retain the same position before and after the retraction.

The mirror housing 3 may be rotated to the retraction origin position before returning to the operating position, for example, at the timing when the driver manipulates the retraction/return switch SW1. However, this requires relatively long time after the driver manipulates the retraction/return switch SW1 and before the mirror housing 3 actually starts the returning operation, which may irritate the driver. In order to achieve a quick returning operation of the mirror housing 3, the mirror housing 3 may be previously and automatically returned to the retraction origin position at a time when the ignition key is turned to the "ACC" position or when the doors of the vehicle are unlocked, such as by the use of the ignition key or the keyless entry system. In this embodiment, when the driver manipulates the retraction/return switch SW1, the mirror housing 3 only rotates in the returning direction,

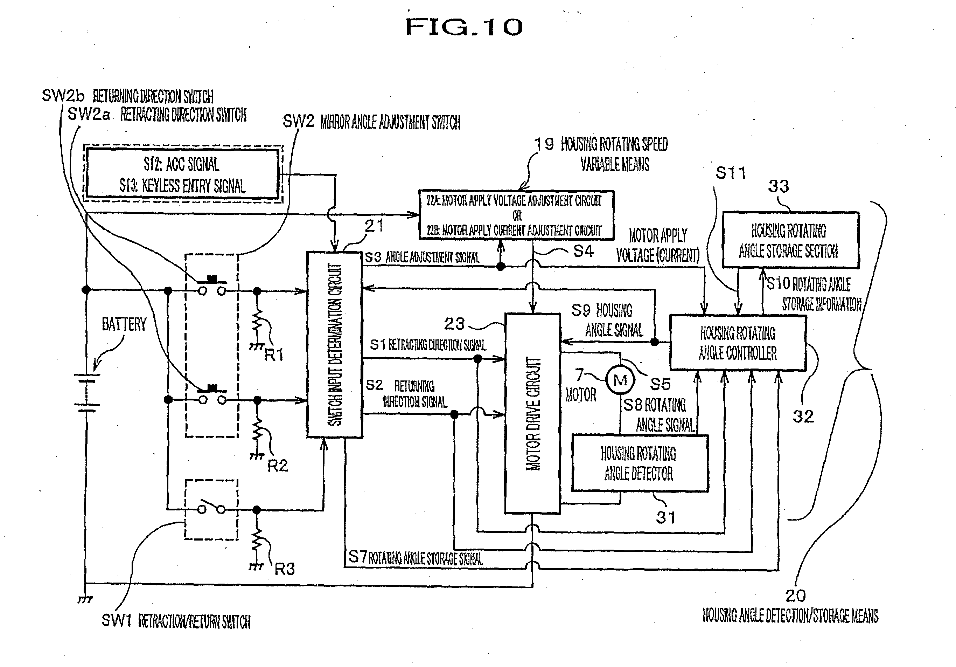

FIG. 10 is a control block diagram according to this preferred embodiment, wherein the housing angle detection/storage means 20 consists of a housing rotating angle detector 31, a housing rotating angle controller 32, and a housing rotating angle storage section 33. Each of the elements will be described below.

### HOUSING ROTATING ANGLE DETECTOR 31

The housing rotating angle detector 31 detects a signal indicating the rotating angle of the mirror housing 3 and outputs the rotating angle signal S8 to the housing rotating angle controller 32. The manner of detecting the rotating angle of the mirror housing 3 is the same as (1) or (2) above.

### HOUSING ROTATING ANGLE CONTROLLER 32

The housing rotating angle controller 32 outputs a housing angle signal S9 to the motor drive circuit 23. The housing angle signal S9 is a signal to change ON-OFF of the motor drive circuit 23. The motor drive circuit 23 is OFF when the rotation of the motor 7 is locked, that is, when the mirror housing 3 positions in the retraction origin position. The housing rotating angle controller 32 functions as follows.
(1) To output the housing angle signal S9 when the retracting direction signal S1 and the angle adjustment signal S3 are simultaneously inputted, in other words, at the time of the mirror angle adjustment in the retracting direction.
(2) To output the housing angle signal S9 when the returning direction signal S2 and the angle adjustment signal S3 are simultaneously inputted, in other words, at the time of the mirror angle adjustment in the returning direction.
(3) To output the housing angle signal S9 when the retracting direction signal S1 is inputted and the angle adjustment signal S3 is not inputted, in other words, at the time of the retraction of the mirror housing 3 during the input of the rotating angle signal S8.
(4) To receive the returning direction signal S2, and to read out the rotating angle storage data S11 from the housing rotating angle storage section 33 when the angle adjustment signal S3 is not inputted, in other words, at the time of the return of the mirror housing 3, and further to output the housing angle signal S9 until the rotating angle signal S8 matches to the rotating angle storage data S11.
(5) To count the rotating angle signal S8 when the rotating angle storage signal S7 is inputted, and to output rotating angle storage information S10 to the housing rotating angle storage section 33.

As to output of the above signals, for example, a microcomputer monitors the inputs of the retracting direction signal S1, the returning direction signal S2, the rotating angle storage signal S7, and the angle adjustment signal S3.

### HOUSING ROTATING ANGLE STORAGE SECTION 33

The housing rotating angle storage section 33 functions as follows:
(1) To store the rotating angle storage information S10 to be inputted from the housing rotating angle controller 32.
(2) To output the stored rotating angle storage information S10 to the housing rotating angle controller 32 as the rotating angle storage data S11.

For example, a built-in RAM that is internally stored in the microcomputer can be adapted as the housing rotating angle storage section 33.

### SWITCH INPUT DETERMINATION CIRCUIT 21

The switch input determination circuit 21 receives a signal at least inputted through the retraction/return switch SW1 or the mirror angle adjustment switch SW2, and outputs either the retracting direction signal S1 or the returning direction signal S2 to the motor drive circuit 23 and the housing rotating angle controller 32. When the retraction/return switch SW1 is switched to the retraction side, the retracting direction signal S1 is outputted to the motor drive circuit 23 and the housing rotating angle controller 32, and at the same time, the rotating angle storage signal S7 is outputted to the housing rotating angle controller 32. The retracting angle signal S1 and the rotating angle storage signal S7 are outputted until the housing angle signal S9 becomes OFF.

When the ACC signal S12 or the keyless entry signal S13, etc. are inputted to the switch input determination circuit 21, the switch input determination circuit 21 once outputs the retracting direction signal S1 to the motor drive circuit 23 and the housing rotating angle controller 32. In this event, the retracting direction signal S1 is also outputted until the housing angle signal S9 becomes OFF. Accordingly, the motor 7 rotates through the motor drive circuit 23 in the retracting direction. Therefore, even if the mirror housing 3 deviates from the retraction originposition because of an external load, the mirror housing 3 repositions in the retraction origin position.

Next, when the retraction/return switch SW1 is switched to the return side, the returning direction signal S2 is outputted to the motor drive circuit 23 and the housing rotating angle controller 32, and at the same time, the rotating angle storage signal S7 is outputted to the housing rotating angle controller 32. The retracting direction signal S1 and the rotating angle storage signal S7 are outputted until the housing angle signal S9 becomes OFF. Accordingly, the motor 7 rotates through the motor drive circuit 23 in the returning direction, and the mirror housing 3 reliably returns to the same operating position as before the retraction.

Because the applied motor voltage adjustment circuit 22A, the applied motor current adjustment circuit 22B, and the motor drive circuit 23 are the same as described above, detailed descriptions thereof will be omitted.

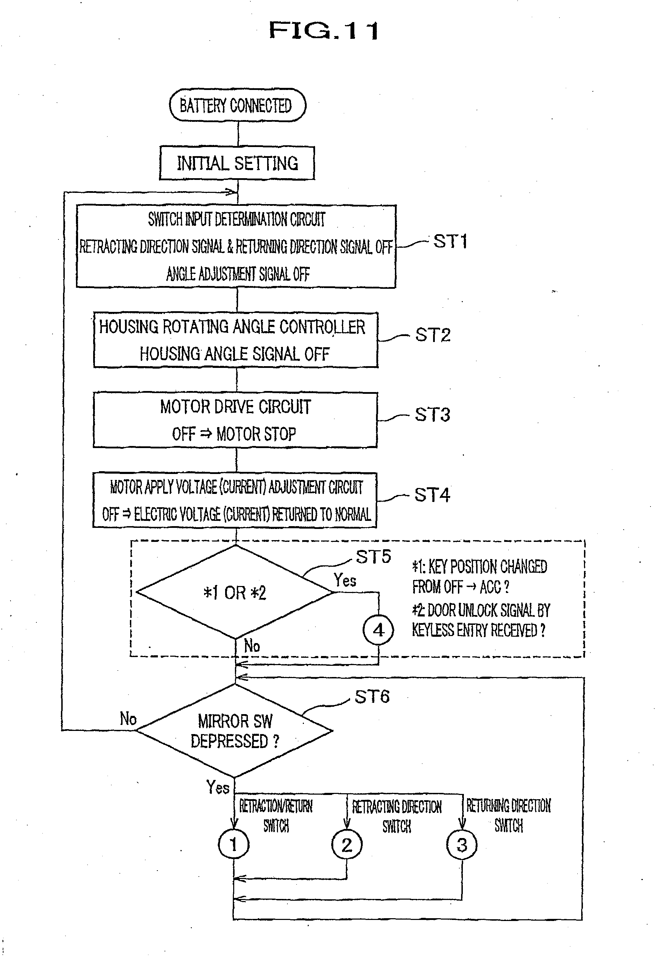

The aforementioned series of operations are shown in flow charts from FIG. 11 through FIG. 18. In these figures, reference numerals are omitted. With reference to FIG. 11 and FIG. 10 firstly for explanation, in step ST1, outputs of the retracting direction signal S1 and the returning direction signal S2 are both OFF and the output of the angle adjustment signal S3 is also OFF in the switch input determination circuit 21. In this event, the output of the housing angle signal S9 becomes OFF in the housing rotating angle controller 32, and the motor drive circuit 23 also becomes OFF, thereby stopping the motor 7 (step ST2 and step ST3). Further, the output of the signal S4 from the motor apply voltage adjustment circuit 22A or the motor apply current adjustment circuit 22B (hereinafter referred to as a "motor apply voltage (current) adjustment circuit") becomes OFF (step ST4).

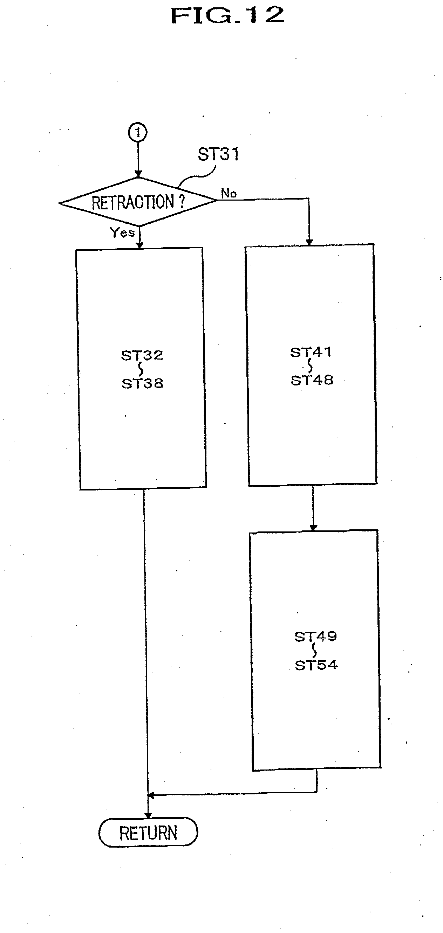

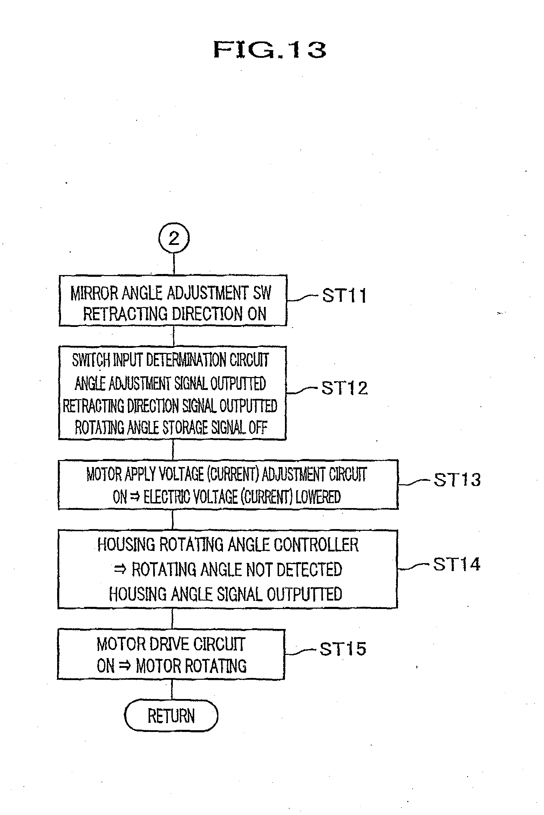

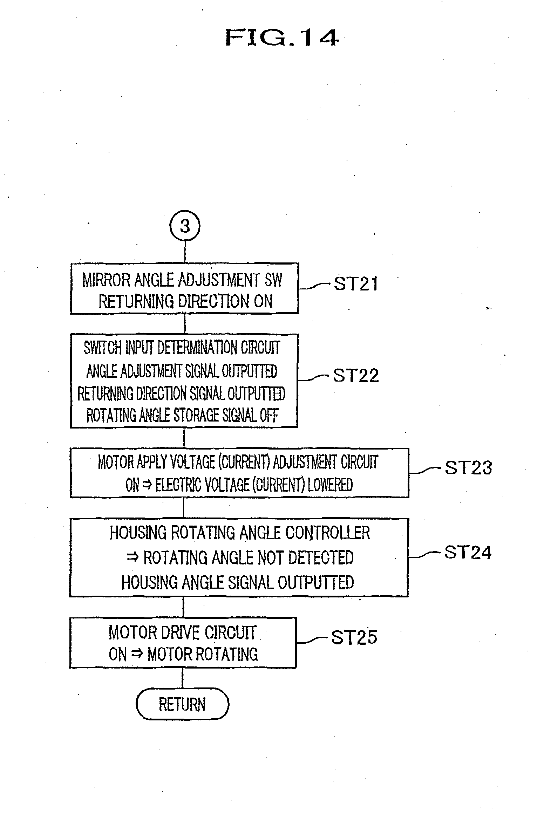

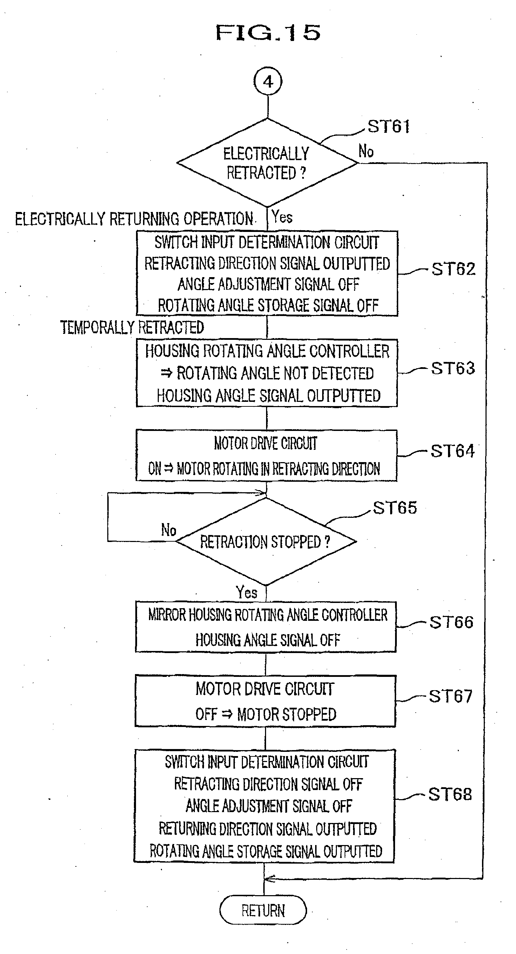

Next, a determination is made in step ST5 as to whether the key position has been changed from "OFF" to "ACC" by the key (ignition key) or whether the signal for unlocking the doors, for example, by the keyless entry system, has been received. If it is determined as "Yes", operation proceeds to the flow chart shown in FIG. 15. If it is determined as "No", operation then proceeds to step ST6. In step ST6, a determination is made as to whether any of the switches for the mirror housing 3 has been depressed. In the case of "Yes" and if the retraction/return switch SM1 has been depressed, operation proceeds to the flow chart shown in FIG. 12. In the case of "Yes" and if the retracting direction switch SW2a of the mirror angle adjustment switch SW2 has been depressed, operation proceeds to the flow chart shown in FIG. 13. Further, in the case of "Yes" and if the returning direction switch SW2b has been depressed, operation proceeds to the flow chart shown in FIG. 14. In step ST6, if the determination is "No", operation repeatedly proceeds to step ST1.

With reference to FIG. 13 and FIG. 10, description will be given of the case where the retracting direction switch SW2a of the mirror angle adjustment switch SW2 has bee depressed. In step ST11, if the mirror angle adjustment switch SW2 is turned "ON" in the retracting direction, the switch input determination circuit 21 outputs the angle adjustment signal S3 and the retracting direction signal S1 in step ST12. In this event, the rotating angle storage signal S7 is not outputted. Next, the applied motor voltage (current) adjustment circuit outputs the signal S4, so that the voltage (electric current) applied to the motor 7 lowers (step ST13). The housing rotating angle controller 32 does not detect the rotating angle signal S8 and outputs the housing angle signal S9 (step ST14). During the input of the housing angle signal S9, the motor drive circuit 23 turns "ON" and by the voltage (electric current) lowered in step ST13 the motor 7 rotates in the retracting direction with a low speed.

With reference to FIG. 14 and FIG. 10, description will be given of the case where the returning direction switch SW2b of the mirror angle adjustment switch SW2 has been depressed. In step ST21, if the mirror angle adjustment switch SW2 is turned "ON" in the returning direction, the switch input determination circuit 21 outputs the angle adjustment signal S3 and the returning direction signal S2 in step ST22. In this event, the rotating angle storage signal S7 is not outputted. Next, the motor apply voltage (current) adjustment circuit outputs the signal S4, so that the voltage (electric current) applied to the motor 7 lowers (step ST23). The housing rotating angle controller 32 does not detect the rotating angle signal S8 and outputs the housing angle signal S9 (step ST24). During the input of the housing angle signal S9, the motor drive circuit 23 turns "ON" and by the voltage (electric current) lowered in step ST23 the motor 7 rotates in the returning direction with a low speed.

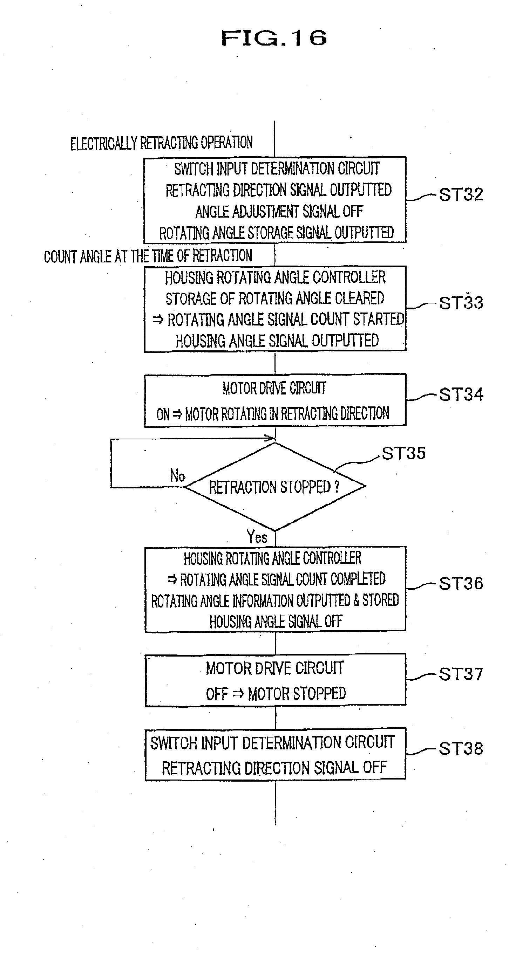

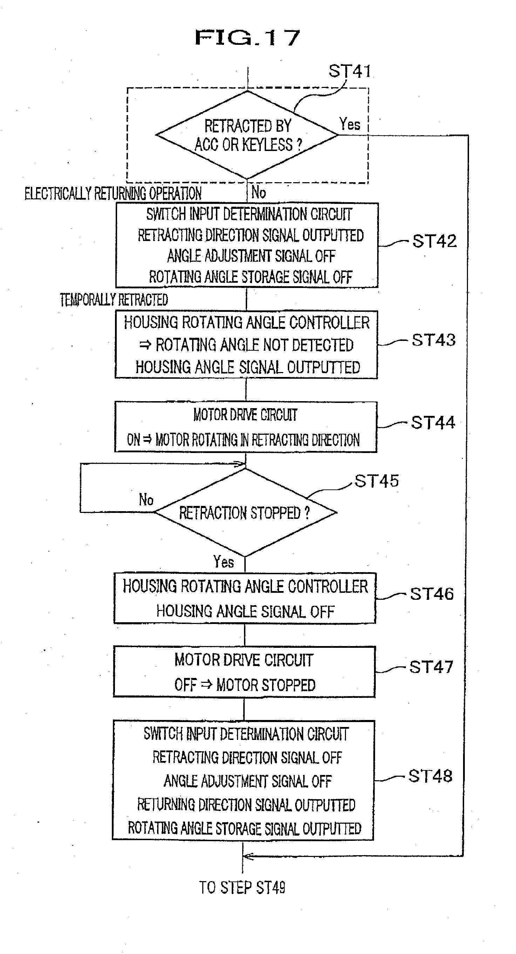

With reference to FIG. 12, FIGS. 16 to 18, and FIG. 10, the flow of operation will be described for the case where the retraction/return switch SW1 has been depressed. As shown in FIG. 12, a determination is made as to whether the retraction instruction has been given in step ST31. If it is determined as "Yes", operation proceeds to step ST32 shown in FIG. 16. If it is determined as "No", operation then proceeds to step ST41 shown in FIG. 17. In step ST32 of FIG. 16, the switch input determination circuit 21 outputs the retracting direction signal S1 and the rotating angle storage signal S7. The angle adj ustment signal S3 is not outputted. In step ST33, the housing rotating angle controller 32 once clears the data indicating the rotating angle that is based on the rotating angle signal S8, and starts to count the rotating angle signal S8 to be inputted thereafter. When doing this, the hous ing rotating angle controller 32 outputs the housing angle signal S9.

In step ST34, the motor drive circuit 23 receives the input of the housing angle signal S9 and turns "ON", so that the motor 7 rotates in the retracting direction. In the next step ST35, a determination is made as to whether the retracting operation has been stopped. If it is determined as "Yes", the housing rotating angle controller 32 stops to count the rotating angle signal S8 in step ST36. Such data is outputted to and stored in the housing rotating angle storage section 33 as the rotating angle storage information S10. Further, the output of the housing angle signal S9 becomes "OFF". As the result, in step ST37, the motor drive circuit 23 is turned "OFF" and the rotation of the motor 7 stops. In step ST38, the retracting direction signal S1 from the switch input determination circuit 21 is turned "OFF".

In step ST41 of FIG. 17, if the key position is "ACC" position or the doors are unlocked by the keyless entry system, a determination is made as to whether the mirror housing 3 has been retracted to the retraction origin position. If it is determined as "Yes", operation proceeds to step ST49. If is determined as "No", operation then proceeds to step ST42. In step ST42, the switch input determination circuit 21 outputs the retracting direction signal S1. The angle adjustment signal S3 and the rotating angle storage signal S7 are both OFF. In the next step ST43, the housing rotating angle controller 32 outputs the housing angle signal S9 without detecting the rotating angle signal S8. In step ST44, the motor drive circuit 23 receives the housing angle signal S9 and turns "ON". The motor 7 then rotates in the retracting direction.

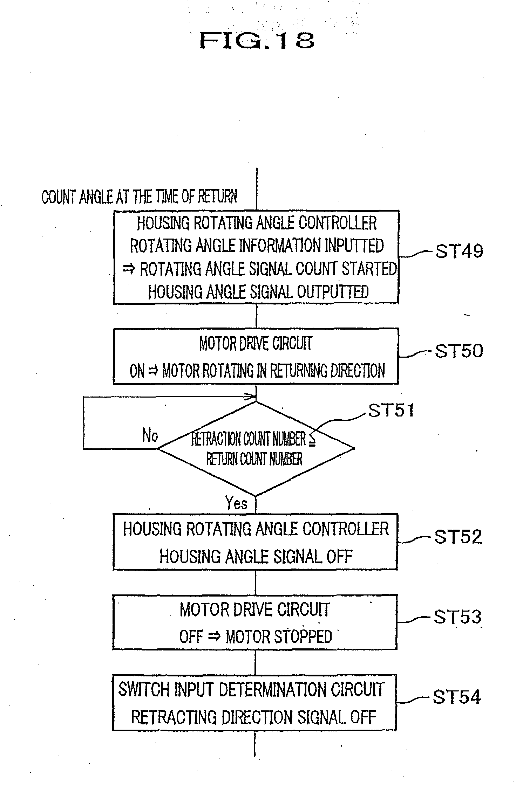

In step ST45, a determination is made as to whether the retracting operation has been stopped. If it is determined as "Yes", the output of the housing angle signal S9 from the housing rotating angle controller 32 is turned "OFF". As the result, in step ST47, the motor drive circuit 23 is turned "OFF" and the rotation of the motor 7 stops. Further, in step ST48, the switch input determination circuit 21 operates such that the outputs of the retracting direction signal S1 and the angle adjustment signal S3 are OFF, and outputs the returning direction signal S2 and the rotating angle storage signal S7. In the next step ST49 shown in FIG. 18, the housing rotating angle controller 32 receives the rotating angle storage data S11, which is the same as the rotating angle storage information S10 stored in step ST36, from the housing rotating angle storage section 33. At the same time, the housing rotating angle controller 32 starts to count the rotating angle signal S8. Further, the housing rotating angle controller 32 outputs the housing angle signal S9.

In step ST50, the motor drive circuit 23 receives the housing angle signal S9 and turns "ON", so that the motor 7 rotates in the returning direction. In the next step ST51, the housing rotating angle controller 32 compares and collates the count number at the time of retraction and the count number at the time of return. In other words, the comparison/collation is executed between the rotating angle storage data S11 and the rotating angle signal S8 that is currently being inputted. If the count number at the time of return (rotating angle signal S8) becomes equal to or greater than the count number at the time of retraction (rotating angle storage data S11) , the output of the housing angle signal S9 becomes OFF at the housing rotating angle controller 32 (step ST52). As the result, the motor drive circuit 23 turns "OFF" in step ST53, and the rotation of the motor stops. In step ST54, the output of the retracting direction signal S1 becomes OFF at the switch input determination circuit 21.

With reference to FIG. 15 and FIG. 10, description will be given of the case where the determination is "Yes" in step ST5 of FIG. 11. In step ST61, a determination is made as to whether the mirror housing 3 has been retracted. If it is determined as "Yes", operation proceeds to step ST62. If it is determined as "No", operation then proceeds to step ST6 (FIG. 11). In step ST62, the switch input determination circuit 21 outputs the retracting direction signal S1. The angle adjustment signal S3 and the rotating angle storage signal S7 are both OFF. In step ST63, the housing rotating angle controller 32 does not detect the rotating angle signal S8, and outputs the housing angle signal S9. In step ST64, the motor drive circuit 23 is turned "ON" and the motor 7 rotates in the retracting direction.

In the next step ST65, a determination is made as to whether the retracting operation has been stopped. If it is determined as "Yes", the output of the housing angle signal S9 from the housing rotating angle controller 32 becomes "OFF" in step ST66. As the result, in step ST67, the motor drive circuit 23 is turned "OFF" and the rotation of the motor 7 stops. Further, in step ST68, the switch input determination circuit 21 operates such that the outputs of the retracting direction signal S1 and the angle adjustment signal S3 are OFF, and outputs the returning direction signal S2 and the rotating angle storage signal S7.

While the present invention has been described in detail with reference to specific embodiments thereof, it is to be understood that each structural element is not limited to the specific layout, form or number recited in the drawings and that various changes and modifications may be made without departing from the scope of the claims.

## Claims

1. An electrically retractable outer mirror for a vehicle comprising:
a mirror housing;
a mirror accommodated in the mirror housing, angle of the mirror being adjustable relative to a vehicle body;
wherein the angle of the mirror in an upward/downward direction is adjusted through an actuator arranged in the mirror housing, and an angle of the mirror in a rightward/leftward direction is adjusted by a rotating movement of the mirror housing around an axis substantially extending along a vertical direction.

2. An electrically retractable outer mirror for a vehicle according to claim 1, further comprising a speed adjustment means for varying a rotation speed of the mirror housing between an instance where the mirror housing retracts to a retracting position or returns to an operating position and an instance where the mirror housing rotates for a mirror angle adjustment in the rightward/leftward direction.

3. An electrically retractable outer mirror for a vehicle according to claim 2, further comprising a retraction/return switch for operating a retraction and a return of the mirror housing, and a mirror angle adjustment switch for adjusting the angle of the mirror, wherein the speed adjustment means comprises:
a switch input determination circuit for determining a signal from the retraction/return switch and a signal from the mirror angle adjustment switch; and
at least one of an applied motor voltage adjustment circuit or an applied motor current adjustment circuit, the applied motor voltage adjustment circuit adjusting a voltage value to be applied to a rotation motor for the mirror housing based on a determination signal outputted from the switch input determination circuit, and the applied motor current adjustment circuit adjusting an electric current value to be applied to the rotation motor for the mirror housing based on a determination signal outputted from the switch input determination circuit.

4. An electrically retractable outer mirror for a vehicle according to claim 2, further comprising a mirror angle adjustment switch for adjusting the angle of the mirror, wherein the speed adjustment means comprises:
a switch input time determination circuit for determining an input time of a signal from the mirror angle adjustment switch; and
at least one of an applied motor voltage adjustment circuit or an applied motor current adjustment circuit, the applied motor voltage adjustment circuit adjusting a voltage value to be applied to a rotation motor for the mirror housing based on a determination signal outputted from the switch input time determination circuit, and the applied motor current adjustment circuit adjusting an electric current value to be applied to the rotation motor for the mirror housing based on a determination signal outputted from the switch input time determination circuit.

5. An electrically retractable outer mirror for a vehicle according to any one of claims 1 to 4, further comprising a housing angle detection/storage means for detecting and storing an angle of the mirror housing in the rightward/leftward direction just before retracting the mirror housing, wherein when the mirror housing is returned from the retracted position to the operating position, the mirror housing retains the angle to which it was adjusted before the retraction.

6. An electrically retractable outer mirror for a vehicle according to claim 5, wherein a rotating angle of the mirror housing is detected by a detected member and a detecting member for detecting the position of the detected member, the detected member being provided at either one of a stationary portion fixed to the vehicle body or the mirror housing, and the detecting member being provided at the other one of the mirror housing or the stationary portion.

7. An electrically retractable outer mirror for a vehicle according to claim 5, wherein a rotating angle of the mirror housing is detected based on a number of rotations of a rotation motor for the mirror housing.

8. An electrically retractable outer mirror for a vehicle according to any one of claims 5 to 7, wherein the mirror housing is positioned in a retraction origin position before the mirror housing is returned from the retracted position to the operating position.

9. An electrically retractable outer mirror for a vehicle according to claim 8, wherein the mirror housing is positioned in the retraction origin position at a time when an ignition key is turned.

10. An electrically retractable outer mirror for a vehicle according to claim 8, wherein the mirror housing is positioned in the retraction origin position at a time when doors of the vehicle are unlocked.
